# EUROPÄISCHE PATENTSCHRIFT

(11) **EP 0 951 117 B1**
(45) Veröffentlichungstag und Bekanntmachung des Hinweises auf die Patenterteilung: **16.05.2007**
(21) Anmeldenummer: 99105244.0
(22) Anmeldetag: 13.03.1999
(51) Int. Cl.: H02B 1/30

(54) **Fenstereinheit**
Window assembly
Ensemble de fenêtre

(30) Priorität: 17.04.1998 DE 19817918
(43) Veröffentlichungstag der Anmeldung: 20.10.1999
(73) Patentinhaber: Rittal-Werk Rudolf Loh GmbH & Co. KG, 35745 Herborn (DE)
(72) Erfinder: Müller, Matthias, 35708 Haiger (DE); Münch, Udo, 35764 Sinn (DE); Schmitt, Heinz, 35716 Dietzhölztal (DE); Wirbelauer, Jörg, 35781 Weilburg (DE)
(74) Vertreter: Fleck, Hermann-Joseph

(56) Entgegenhaltungen:
- EP-A- 0 010 763
- FR-A- 2 700 644
- US-A- 5 082 336
- US-A- 5 281 018

## Beschreibung

Die Erfindung betrifft eine Fenstereinheit zum Anbau an ein Verkleidungselement eines Schaltschrankes entsprechend dem Oberbegriff des Anspruchs 1 (Siehe EP-A- 0 010 763).

Solche Fenstereinheiten weisen eine Scheibe auf, die an ihren Kanten umlaufend von einem Rahmen eingefaßt ist. Der Rahmen trägt Scharniere. Zur Anbringung der Fenstereinheit werden Durchbrüche aus dem Verkleidungselement ausgespart. In diese werden die Scharniere eingesetzt und befestigt. In das Verkleidungselement ist hinter der Scheibe ein Ausschnitt aus dem Verkleidungselement ausgespart. Auf der Rückseite des Verkleidungselementes überdeckt ein Kasten den Ausschnitt, in dem elektrische Einbauten untergebracht sind. Durch die Scheibe des Fensterelementes hindurch können die Einbauten eingesehen und bedarfsweise, bei geöffneter Fenstereinheit bedient werden.

Die Anbringung einer solchen Fenstereinheit bedarf einer sorgfältigen Arbeitsweise. Die Scharniere müssen an dem Verkleidungselement so angebracht werden, daß die Scharnierachsen miteinander fluchten. Die nachträgliche Aufrüstung einer Fenstereinheit an einem bestehenden Schaltschrank ist daher nicht ohne weiteres möglich. Desweiteren erweist sich der Ausschnitt im Verkleidungselement bisweilen als ungünstig, da durch ihn die Stabilität und Steifigkeit des Verkleidungselementes beeinträchtigt wird.

Die US 5,082, 336 zeigt einen Schaltschrank mit Verkleldungseiementen. In einem Ausschnitt eines der Verkleidungselemente kann ein Ablagefach eingebaut werden. Das Ablagefach weist einen Rahmen auf, der der Rand des Ausschnittes überdeckt und mit dem Verkleidungselement hier verschraubt ist. An den Rahmen ist auch eine Klappe anscharniert, die die offene Seite des Ablagefaches abdeckt.

Ein weiterer Schaltschrank ist aus der FR 2 700 644 bekannt. Der Schaltschrank besitzt eine Tür, die einen Profilrahmen aufweist. Der Profilrahmen kann mit Füllelementen belegt werden. Eines der Füllelemente wird von mehreren Frontplatten gebildet, die mit einer Tür überdeckt werden können. Hierzu sind Scharniere verwendet, die mit den Füllelementen verschraubt sind.

Die US 5,281,018 zeigt einen Schaltschrank, der frontseitig mit einem Verkleidungselement verschlossen ist. In das Verkleidungselement ist ein Ausschnitt eingebracht, der mit einer anscharnierten Klappe verschlossen werden kann.

Es ist Aufgabe der Erfindung, eine Fenstereinheit der eingangs erwähnten Art zu schaffen, die sich einfach an einem Verkleidungselement montieren läßt.

Diese Aufgabe wird durch die Merkmale des Anspruchs 1 gelöst. Der Rahmen und das hieran anscharnierte Fensterelement bilden eine Baueinheit, die vorgefertigt werden kann. Diese Baueinheit läßt sich dann an dem Verkleidungselement anbringen, beispielsweise anschrauben. Dies ist einfach durchzuführen, da keine besonderen Maßtoleranzen einzuhalten sind. Damit kann die Fenstereinheit auch einfach nachträglich aufgerüstet werden. Wenn ein Ausschnitt im Verkleidungselement vorgesehen ist, dann steift der Rahmen.

Der starr an dem Verkleidungselement montierte Rahmen hat eine aussteifende Wirkung, so daß ein Ausschnitt die Stabilität des Verkleidungselementes nicht oder nur unwesentlich beeinträchtigt.

Mit der erfindungsgemäßen Fenstereinheit muß auch nicht zwingend ein Ausschnitt in das Verkleidungselement eingebracht werden. Der Rahmen kann so ausgebildet sein, daß er das Fensterelement beabstandet zu der Frontseite des

Verkleidungselementes hält. Auf diese Weise entsteht vor dem Verkleidungselement ein Montage- und Installationsraum

Zur vereinfachten Montage der Fenstereinheit kann auch vorgesehen sein, daß auf der Rückseite des als Schranktür ausgebildeten Verkleidungselementes ein Türrohrrahmen befestigt ist, der ein Raster von Befestigungsaufnahmen aufweist, und daß durch die Befestigungsaufnahmen Befestigungsschrauben hindurchgeführt und in den Rahmen eingeschraubt sind. Die Befestigungsaufnahmen des Türrohrrahmens werden dementsprechend als Bohrschablone für den Rahmen benutzt. Dabei müssen die Befestigungsaufnahmen des Rahmens auf das Befestigungsraster des Türrohrrahmens abgestimmt sein.

Nach einer bevorzugten Ausgestaltungsvariante der Erfindug ist vorgesehen, daß das Fensterelement eine Scheibe aufweist, die an wenigstens zwei Seiten mit Kantenprofilen versehen ist, wobei das eine Kantenprofil die Scharniere zur Anbindung an den Rahmen trägt, und das zweite Kantenprofil mit einer Schließeinrichtung versehen ist. Die Kantenprofile können dabei als separate Teile ausgebildet sein, die sich nachträglich an der Scheibe befestigen, beispielsweise ankleben lassen. Denkbar ist jedoch auch, daß die Kantenprofile direkt an die Scheibe angespritzt sind.

Eine mögliche Erfindungsvariante ist dadurch gekennzeichnet, daß der Rahmen eine Montageplatte trägt, die im geschlossenen Zustand des Fensterelementes parallel beabstandet zu dem Fensterelement angeordnet und mit elektrischen Bauteilen bestückbar ist. Die Montageplatte kann separat bestückt und verdrahtet werden. Anschließend läßt sie sich an den Rahmen anbauen. Die so geschaffene Fenstereinheit läßt sich dann an das Verkleidungselement anbauen. Die Montageplatte kann beispielsweise auch werksseitig mit einer gravierten oder gedruckten Schaltung versehen sein.

Zur Vergrößerung des von der Fenstereinheit umgebenen Installationsraumes ist es denkbar, daß an den Rahmen ein Distanzrahmen anbaubar ist. Dabei kann dann auch der Distanzrahmen in seinem, dem Rahmen abgewandten Bereich die Montageplatte parallel beabstandet zu dem geschlossenen Fensterelement halten.

Zur Erreichung eines gelungenen optischen Abschlusses sieht eine erfindungsgemäße Fenstereinheit vor, daß der Rahmen in dem Ausschnitt des Verkleidungselementes eingesetzt ist und mit einem umlaufenden, seitlich vorspringenden Rand um den Ausschnitt herum auf der Vorderseite des Verkleidungselementes anliegt.

Die Erfindung wird im folgenden anhand eines in den Zeichnungen dargestellten Ausführungsbeispieles näher erläutert. Es zeigen:
- Fig. 1: in perspektivischer Darstellung einen Schaltschrank mit einer in Explosionsdarstellung gezeigten Fenstereinheit,
- Fig. 2: einen Schaltschrank gemäß Fig. 1 mit einer erweiterten Fenstereinheit,
- Fig. 3: in vergrößerter Teildarstellung einen Horizontalschnitt durch den Randbereich der Fenstereinheit gemäß Fig. 1 und
- Fig. 4: in vergrößerter Teildarstellung einen Horizontalschnitt durch den Randbereich der Fenstereinheit gemäß Fig. 2.

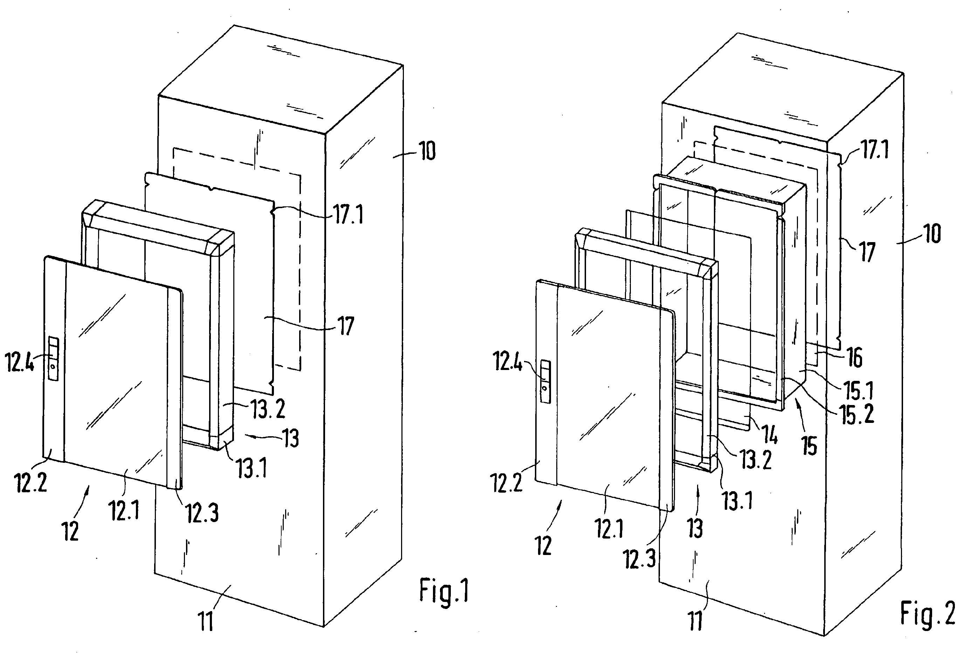

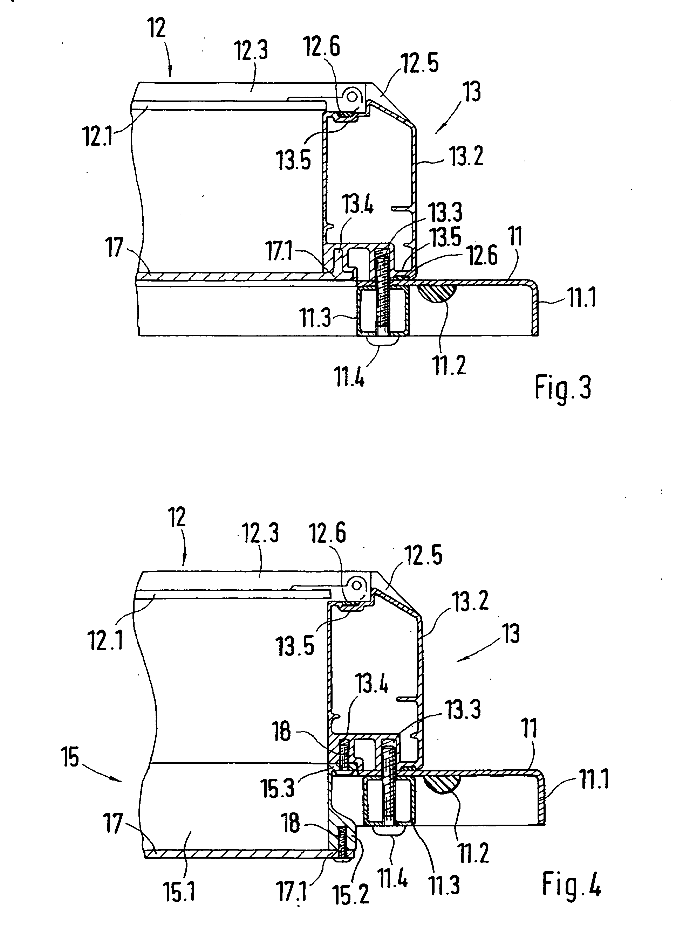

In Fig. 1 ist der Schrankkorpus 10 eines Schaltschrankes schematisch dargestellt. Der Schrankkorpus ist an seinen Seiten mit Verkleidungselementen 11 versehen. An dem vorderseitigen Verkleidungselement 11, beispielsweise einer Schranktür, kann eine Fenstereinheit befestigt werden. Die Fenstereinheit besteht in diesem Falle aus einem Rahmen 13, einem Fensterelement 12 und einer Montageplatte 17. Der Rahmen 13 weist vier Profilabschnitte 13.2 auf, die in den Rahmenecken mittels Eckstücken 13.1 miteinander verbunden sind. Die Querschnittsform eines Profilabschnittes 13.2 kann im Einzelnen der Fig. 3 entnommen werden. Wie aus dieser Darstellung ersichtlich ist, ist der Profilabschnitt 13.2 als Strangpreßprofil ausgebildet. Er weist an seiner, dem Verkleidungselement 11 zugewandten Seite zwei, in Längsrichtung des Profilabschnittes 13.2 verlaufende Nuten auf, die als Gewindeaufnahmen 13.3, 13.4 dienen. Im Bereich der Anschlußfläche an das Verkleidungselement 11 besitzt der Profilabschnitt 13.2 eine Dichtungsaufnahme 13.5. In diese kann eine Dichtung 12.6 eingelegt werden. An ihrer, dem Verkleidungselement 11 abgewandten Seite ist der Profilabschnitt 13.2 mit einer weiteren, als Nut ausgebildeten Dichtungsaufnahme 13.5 versehen. In diese ist ebenfalls eine Dichtung 12.6 eingelegt, die das Fensterelement 12 abdichtet.

Der Fig. 1 läßt sich weiter entnehmen, daß das Fensterelement 12 eine Scheibe 12.1 aufweist, die an ihren beiden vertikal verlaufenden Rändern mit Kantenprofilen 12.2, 12.3 versehen ist. Das Kantenprofil 12.2 trägt eine Schließeinrichtung 12.4. Die Schließeinrichtung 12.4 kann beispielsweise als Verschlußelement einen Doppelbart-Einsatz tragen, der mit einem Vorreiber ausgestattet ist. Dieser Vorreiber greift in der Schließstellung hinter eine entsprechende Kante des Rahmens 13. Das Kantenprofil 12.3 ist mit Scharnieren 12.5 ausgerüstet, wie dies die Fig. 3 erkennen läßt. Die Scharniere 12.5 sind an dem zugeordneten vertikalen Profilabschnitt 13.2 des Rahmens 13 befestigt. Die vertikal verlaufende Scharnierachse ist dabei vor dem Profilabschnitt 13.2 gehalten. Dies ermöglicht es, daß das Fensterelement 12 um 180° aufgeschwenkt werden kann. Hierdurch wird eine optimale Zugänglichkeit zu dem, von dem Rahmen 13 umgebenen Montageraum gewährleistet.

Die Montageplatte 17 kann an dem Rahmen 13 befestigt werden. Hierzu ist die Montageplatte 17 an ihrem Rand mit Aussparungen 17.1 versehen. In diese Aussparungen 17.1 können Befestigungsschrauben eingesetzt und in die Gewindeaufnahme 13.4 der Profilabschnitte 13.2 eingeschraubt werden. Zur vereinfachten Anbringung der Montageplatte 17 besitzt der Rahmen 13 eine Innenaufnahme, die in ihren Abmessungen auf die Außengeometrie der Montageplatte 17 abgestimmt ist. Auf der Montageplatte 17 können elektrische Einbauten angebracht werden. Diese lassen sich bereits vor der Anbringung der Montageplatte installieren und betriebsbereit miteinander verdrahten. Die aus Fensterelement 12, Rahmen 13 und Montageplatte 17 bestehende Einheit kann an dem Verkleidungselement befestigt werden. Wie Fig. 3 weiter erkennen läßt, weist das Verkleidungselement 11, im vorliegenden Fall eine Schranktür, an ihrem Rand eine umlaufende Abkantung 11.1 auf. Parallel beabstandet zu dieser Abkantung 11.1 ist eine Dichtung 11.2 auf der Innenseite des Verkleidungselementes 11 aufgeschäumt. Neben dieser Dichtung 11.2 steift ein Türrohrrahmen 11.3 das Verkleidungselement 11 aus. Der Türrohrrahmen 11.3 weist zwei vertikale Holme auf, die in Längsrichtung mit im Teilungsraster eingebrachten Befestigungsaufnahmen versehen sind. Diese Befestigungsaufnahmen dienen als Bohrschablone zur Anbringung der Fenstereinheit. Dabei ist der nahmen 13.3 des Rahmens 13 angepaßt ausgebildet. Durch die Befestigungsaufnahme des Türrohrrahmens 11.3 können Befestigungsschrauben 11.4 hindurchgesteckt und in die Gewindeaufnahmen 13.3 des Rahmens eingeschraubt werden. Damit ist der Rahmen 13 sicher und stabil im Verkleidungselement 11 festgemacht.

In der Fig. 2 ist eine Erweiterung der Fenstereinheit gezeigt. Demgemäß kann ein Distanzrahmen 15 ergänzt werden. Der Distanzrahmen 15 ist aus vier Strangpressprofilen gefertigt. Er weist eine Wandung 15.1 auf, von der ein Rand 15.2 abgesteht ist. Der Distanzrahmen 15 kann in einen Ausschnitt 16, der aus dem Verkleidungselement 11 ausgespart ist, eingesetzt werden. Die Befestigung des Distanzrahmens 15 an dem Rahmen 13 ist in der Fig. 4 näher gezeigt. Wie sich aus dieser Darstellung entnehmen läßt, weist der Distanzrahmen 15 in seinem dem Rahmen 13 zugekehrtem Endbereich einen Flansch 15.3 auf, der mit Befestigungsaufnahmen versehen ist. Durch diese Befestigungsaufnahmen hindurch können Befestigungsschrauben 18 eingeführt und in die Gewindeaufnahmen 13.4 des Rahmens 13 eingeschraubt werden. Die Wandung 15.1 des Distanzrahmens 15 vergrößert die Einbautiefe der Fenstereinheit. Rückseitig kann der Distanzrahmen 15 mit der Montageplatte 17 abgeschlossen werden. Hierzu sind in den Rand 15.2 Gewindeaufnahmen 18 eingearbeitet. Durch Aussparungen 17.1 der Montageplatte 17 können die Befestigungsschrauben 18 hindurchgeführt und in die Gewindeaufnahmen des Randes 15.2 eingeschraubt werden.

## Patentansprüche

1. Fenstereinheit zum Aufbau an ein Verkleidungselement (11) eines Schaltschrankes (10), wobei auf das Verkleidungselement (11) ein Rahmen (13) aufgesetzt und hier befestigt ist,
**dadurch gekennzeichnet,**
**dass** ein Fensterelement (12) schwenkbar an das Verkleidungselement (11) angekoppelt ist,
**dass** das Fensterelement (12) an dem Rahmen (13) anscharniert ist,
**dass** auf der Rückseite des als Schranktür ausgebildeten Verkleidungselementes (11) ein Türrohrrahmen (11.3) befestigt ist, der ein Raster von Befestigungsaufnahmen aufweist, und
**dass** durch die Befestigungsaufnahmen Befestigungsschrauben hindurchgeführt und in den Rahmen (13) eingeschraubt sind.

2. Fenstereinheit nach Anspruch 1,
**dadurch gekennzeichnet,**
**dass** das Fensterelement (12) eine Scheibe (12.1) aufweist, die an wenigstens zwei Seiten mit Kantenprofilen (12.2, 12.3) versehen ist, wobei das eine Kantenprofil (12.3) die Scharniere (12.5) zur Anbindung an den Rahmen (13) trägt, und das zweite Kantenprofil (12.2) mit einer Schießeinrichtung versehen ist.

3. Fenstereinheit nach Anspruch 1 oder 2,
**dadurch gekennzeichnet,**
**dass** der Rahmen (13) eine Montageplatte (17) trägt, die im geschlossenen Zustand des Fensterelementes (12) parallel beabstandet zu dem Fensterelement (12) angeordnet und mit elektrischen Bauteilen bestückbar ist.

4. Fenstereinheit nach einem der Ansprüche 1 bis 3,
**dadurch gekennzeichnet,**
**dass** an den Rahmen (13) ein Distanzrahmen (15) anbaubar ist, der den von dem Rahmen (13) umgebenen Installationsraum erweitert.

5. Fenstereinheit nach Anspruch 4,
**dadurch gekennzeichnet,**
**dass** der Distanzrahmen (15) in seinem dem Rahmen (13) abgewandten Bereich die Montageplatte (17) parallel beabstandet zu dem geschlossenen Fensterelement (12) hält.

6. Fenstereinheit nach einem der Ansprüche 1 bis 5,
**dadurch gekennzeichnet,**
**dass** der Rahmen (13) aus vier senkrecht zueinander stehenden, als Strangpressprofile ausgebildeten Profilabschnitten (13.2) zusammengesetzt ist, die in den Rahmenecken mit Eckstücken (13.3) verbunden sind, und
**dass** die Profilabschnitte (13.2) mit Gewindeaufnahmen (13.3) zur Befestigung an dem Verbindungselement (11) versehen sind.

7. Fenstereinheit nach einem der Ansprüche 1 bis 6,
**dadurch gekennzeichnet,**
**dass** der Rahmen (13) in den Ausschnitt (16) des Verkleidungselementes (11) eingesetzt ist und mit einem umlaufenden, seitlich vorspringenden Rand um den Ausschnitt (16) herum auf der Vorderseite des Verkleidungselementes (11) anliegt.

## Claims

1. Window unit to be installed on a cladding element (11) of a switchgear cabinet (10), with a frame (13) being placed on the cladding element (11) and fastened there,
**characterized**
**in that** a window element (12) is coupled to the cladding element (11) such that it can pivot,
**in that** the window element (12) is hinge-connected to the frame (13),
**in that** a door tube frame (11.3), which has a grid of fastening receptacles, is fastened on the rear face of the cladding element (11) which is in the form of a cabinet door, and
**in that** fastening screws are passed through the fastening receptacles and screwed into the frame (13).

2. Window unit according to Claim 1,
**characterized**
**in that** the window element (12) has a pane (12.1) which is provided with edge profiles (12.2, 12.3) on at least two sides, with one edge profile (12.3) having the hinges (12.5) for connection to the frame (13), and the second edge profile (12.2) being provided with a locking device.

3. Window unit according to Claim 1 or 2,
**characterized**
**in that** the frame (13) has a mounting plate (17) which is arranged parallel to and at a distance from the window element (12) in the closed state of the window element (12) and can be fitted with electrical components.

4. Window unit according to one of Claims 1 to 3,
**characterized**
**in that** a spacer frame (15), which extends the installation space surrounded by the frame (13), can be attached to the frame (13).

5. Window unit according to Claim 4,
**characterized**
**in that** that region of the spacer frame (15) which faces away from the frame (13) holds the mounting plate (17) parallel to and at a distance from the closed window element (12).

6. Window unit according to one of Claims 1 to 5,
**characterized**
**in that** the frame (13) is made up of four profiled sections (13.2) which are perpendicular to one another, are in the form of extruded profiles and are connected to corner pieces (13.3) in the corners of the frame, and
**in that** the profiled sections (13.2) are provided with threaded receptacles (13.3) for the purpose of fastening to the cladding element (11).

7. Window unit according to one of Claims 1 to 6,
**characterized**
**in that** the frame (13) is inserted into the cutout (16) in the cladding element (11) and rests on the front face of the cladding element (11) around the cutout (16) by means of a circumferential rim which projects in the lateral direction.

## Revendications

1. Ensemble de fenêtre à monter sur un élément d'habillage (11) d'une armoire de distribution (10), dans lequel un cadre (13) est posé sur l'élément d'habillage (11) et y est fixé, **caractérisé en ce qu'**un élément de fenêtre (12) est assemblé de façon pivotante à l'élément d'habillage (11), **en ce que** l'élément de fenêtre (12) est articulé par des charnières sur le cadre (13), **en ce qu'**un cadre tubulaire de porte (11.3), qui présente une grille de logements de fixation, est fixé sur le côté arrière de l'élément d'habillage (11) constituant une porte d'armoire, et **en ce que** des vis de fixation sont introduites à travers les logements de fixation et sont vissées dans le cadre (13).

2. Elément de fenêtre selon la revendication 1, **caractérisé en ce que** l'élément de fenêtre (12) comprend une vitre (12.1), qui est pourvue de profilés latéraux (12.2, 12.3) sur au moins deux côtés, un premier profilé latéral (12.3) portant les charnières (12.5) pour l'assemblage au cadre (13) et l'autre profilé latéral (12.2) étant pourvu d'un dispositif de fermeture.

3. Ensemble de fenêtre selon la revendication 1 ou 2, **caractérisé en ce que** le cadre (13) porte une plaque de montage (17) qui, à l'état fermé de l'élément de fenêtre (12), est placée parallèlement à distance de l'élément de fenêtre (12) et peut être équipée de composants électriques.

4. Ensemble de fenêtre selon l'une quelconque des revendications 1 à 3, **caractérisé en ce qu'**un cadre d'écartement (15) peut être monté sur le cadre (13) et élargit ainsi l'espace d'installation entouré par le cadre (13).

5. Ensemble de fenêtre selon la revendication 4, **caractérisé en ce que** le cadre d'écartement (15), dans sa région située à l'opposé du cadre (13), maintient la plaque de montage (17) parallèlement à distance de l'élément de fenêtre (12) fermé.

6. Ensemble de fenêtre selon l'une quelconque des revendications 1 à 5, **caractérisé en ce que** le cadre (13) est composé de quatre segments de profilé (13.2) formés par extrusion, placés perpendiculairement les uns par rapport aux autres et reliés aux angles du cadre par des goussets (13.3), et **en ce que** les segments de profilé (13.2) sont pourvus de logements filetés (13.3) pour leur fixation sur l'élément d'habillage (11).

7. Ensemble de fenêtre selon l'une quelconque des revendications 1 à 6, **caractérisé en ce que** le cadre (13) est inséré dans la découpe (16) de l'élément d'habillage (11) et s'applique par un bord périphérique latéralement saillant autour de la découpe (16) sur le côté avant de l'élément d'habillage (11).
